Europäisches Patentamt

European Patent Office

Office européen des brevets

(11) Veröffentlichungsnummer: **0 422 372 A2**

# (12) EUROPÄISCHE PATENTANMELDUNG

(21) Anmeldenummer: 90116429.3

(22) Anmeldetag: 28.08.90

(51) Int. Cl.⁵: **F02P 7/10**, F16B 21/18, F02P 7/02

(30) Priorität: 10.10.89 DE 8912039 U

(43) Veröffentlichungstag der Anmeldung:
17.04.91 Patentblatt 91/16

(84) Benannte Vertragsstaaten:
DE FR GB IT

(71) Anmelder: **ROBERT BOSCH GmbH**
**Postfach 10 60 50**
**W-7000 Stuttgart 10(DE)**

(72) Erfinder: **Doderer, Klaus, Dipl.-Ing.**
**Wildbadstrasse 15**
**W-7540 Neuebuerg(DE)**
Erfinder: **Lein, Ralf**
**Jaegerstrasse 79**
**W-7014 Kornwestheim(DE)**

(54) **Verteilerläufer von Zündverteilern für Brennkraftmaschinen.**

(57) Es ist die Axialsicherung eines Verteilerläufers (11) auf der Antriebswelle (12) eines Zündverteilers in gut montierbarer Weise mit kostengünstigen Bauteilen zu verwirklichen.

Dazu wird die an einem außerhalb des Verteilerläufers (11) angeordneten unteren Ansatz (19) des Verteilerläufers (11) angebrachte partielle Ausnehmung (23), die fertigungstechnisch in einem einzigen Arbeitsgang herstellbar ist, in Formschluß gesetzt mit einem Sicherungselement (14), das die grundsätzliche Ausgestaltung eines Sprengringes bzw. eines Sicherungsringes hat und die Modifikation mittels einer Ausformung (28) entsprechend auf die Ausnehmung (23) abgestimmt ist.

Hierdurch ist eine mit einfach gestalteten Teilen verwirklichte funktionsgerechte Verbindung zwischen Verteilerläufer (11) und Antriebswelle (12) geschaffen, die infolge der Formschlußsicherung auch erhöhten axialen Belastungen des Zündverteilers bei Ottomotoren gerecht wird.

EP 0 422 372 A2

## VERTEILERLÄUFER VON ZÜNDVERTEILERN FÜR BRENNKRAFTMASCHINEN

Stand der Technik

Die Erfindung geht aus von einem Verteilerläufer von Zündverteilern für Brennkraftmaschinen nach der Gattung des Anspruchs 1.

Es sind bereits Läufer dieser Gattung bekannt, bei denen die Fixierung auf der Antriebswelle über ein federndes Sicherungselement vorgenommen wird, das in eine Ringnut im Innenmantel des Läuferschaftes einrastet.

Die damit verbundene begrenzte Zugänglichkeit zum Federelement wirkt sich insbesondere in der Großserienfertigung nachteilig aus.

Vorteile der Erfindung

Der erfindungsgemäße Verteilerläufer nach den kennzeichnenden Merkmalen des Anspruchs 1 hat demgegenüber den Vorteil, daß die vorher erwähnten Unzulänglichkeiten in befriedigendem Maß vermieden werden.

Mit einem einfach gestalteten und leicht herstellbaren Sicherungselement wird ein kostengünstiges fertigungstechnisch unkompliziertes Bauteil verwendet.

Trotz dieses einfachen Teiles ist die Funktionsfähigkeit des Verbandes zwischen Verteilerläufer und Antriebswelle über eine kombinierte Formschluß- und Kraftschlußsicherung gewährleistet. Die Formschlußsicherung wird dabei über die erhabene Ausformung am Sicherungselement, die über einen einfachen Stanzvorgang und über die Ausnehmung am unteren Ansatz der mit dem Verteilerläufer verbundenen Lagerbuchse erzielt, wobei die Ausnehmung mittels eines einzigen Fertigungs schrittes und damit kostengünstig hergestellt werden kann.

In den Unteransprüchen sind vorteilhafte Maßnahmen für die Realisierung der Erfindung angegeben. Besonders vorteilhaft ist die Ausgestaltung entsprechend den Ansprüchen 8 bis 10, nach der neben einer dem Stand der Technik entsprechenden Drehmitnahme mit einer Fixiernut und einer Fixierschulter eine redundant absichernde zusätzliche Drehmitnahme zwischen Antriebswelle und Verteilerläufer erstellt ist, ohne daß die Eigenschaft des Sicherungselements als Axialsicherung aufgegeben wird.

Zeichnung

Zwei Ausführungsbeispiele der Erfindung sind in der Zeichnung dargestellt und in der Figurenbeschreibung näher erläutert.

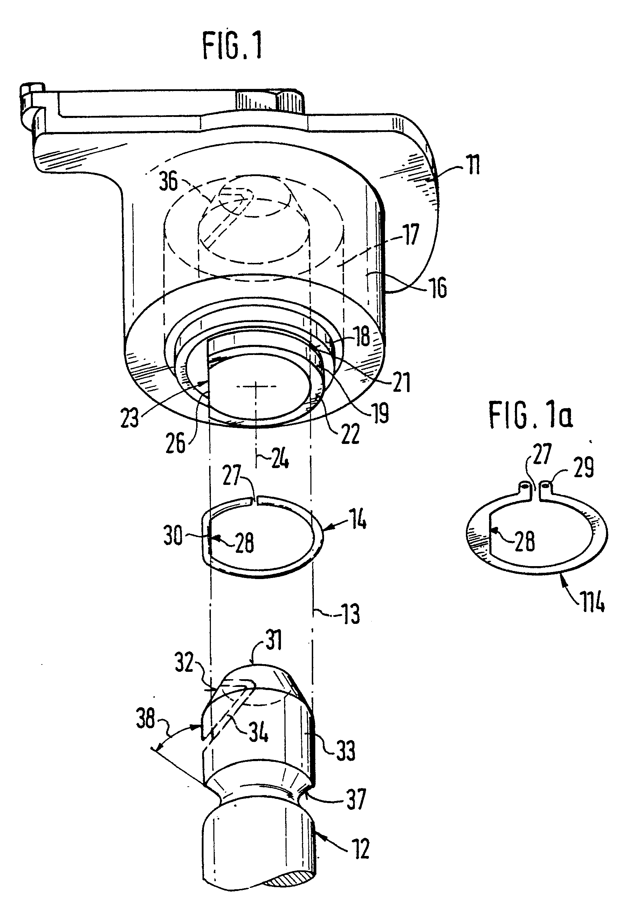

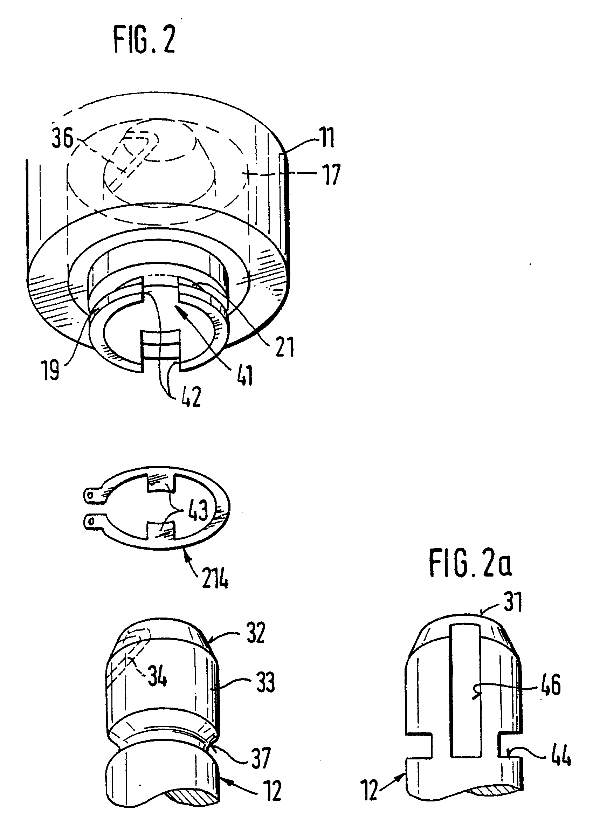

Es zeigen, jeweils in perspektivischer Darstellung, Figur 1 als erstes Ausführungsbeispiel einen Verteilerläufer für Zündverteiler von Brennkraftmaschinen mit abschnittsweisem Endstück der Antriebswelle und mit einem Sicherungselement, Figur 1a eine alternative Ausbildung des Sicherungselements, Figur 2 als zweites Ausführungsbeispiel den Verteilerläufer mit einer geänderten Aufnahme für ein modifiziertes Sicherungselement, Figur 2a dazu die Antriebswelle in einer Variante mit Verdrehschutz.

Beschreibung der Ausführungsbeispiele

Der in Figur 1 partiell dargestellte Zündverteiler für Brennkraftmaschinen für die Verteilung von Zündspannungsimpulsen in einer Mehrzylinderbrennkraftmaschine zeigt einen Verteilerläufer 11, der mit einer als Verteilerwelle ausgebildete Antriebswelle 12 in Flucht der Bezugslinien 13 mittels eines Sicherungselements 14 verbindbar ist.

Der Verteilerläufer 11 weist einen zu der Antriebswelle 12 des Zündverteilers koaxialen, hülsenförmigen Schaft 16 auf, mit einer fest darin angeordneten Lagerbuchse 17, die in Richtung zur Antriebswelle 12 aus dem Schaft 16 herausragt und hier zwei hohlkreiszylinderförmige Ansätze, einen oberen Ansatz 18, der dem Schaft 16 benachbart ist und einen unteren Ansatz 19 mit im Vergleich zum oberen Ansatz 18 reduzierten Durchmesser bildet. Unmittelbar anschließend am oberen Ansatz 18 ist am unteren Ansatz 19 eine im Querschnitt rechteckförmige Ringnut 21 angebracht.

Des weiteren ist der untere Ansatz 19 durch eine parallel zur Drehachse 24 der Lagerbuchse 17 angebrachte seitliche Ausnebmung 23 in voller axialer Höhe von der Stirnseite 22 des unteren Ansatzes bis zum oberen Ansatz 18 geschwächt. Die Ausnebmung 23 kann beispielsweise durch einen einzigen Fräsvorgang hergestellt werden und hat die Form einer Abplattung mit kreissegmentförmigem Querschnitt. Dabei ist der radiale Abstand der Fräserkante zur Drehachse 24 so dimensioniert ist, daß die Lagerbuchse 17 durch die Ausnehmung 23 durchbrochen ist und in diesem Bereich ein Kreissegment mit einer Sehne 26 gebildet ist.

In der Darstellung nach Figur 1 schließt sich unterhalb des Verteilerläufers 11 das Sicherungselement 14 an, das beim ersten Ausführungsbeispiel aus einem Federdraht gefertigt ist, in seiner Grundform kreisringförmig ist und eine engspaltige Trennstelle 27 aufweist.

Um einen Viertelkreis zur Trennstelle 27 versetzt weicht das Sicherungselement 14 von seiner Keisringform ab und bildet eine sehnenartig verlaufende Ausformung 28, wobei die Länge der Sehne 30 der Ausformung 28 um ein Fügespiel größer ist als die Länge der Sehne 26 der Ausnehmung 23.

Alternativ kann das Sicherungslement 14, statt in der Ausbildung eines Sprengringes, auch die Ausbildung eines Sicherungsringes annehmen.

Figur 1a zeigt diese Ausgestaltung als ein Sicherungselements 114, wobei die Kreisringform am Umfang im Bereich der Ausformung erhalten ist und im inneren Verlauf die Ausformung 28, von der Kreisringform abweichend, sehnenartig verläuft und die Länge der Sehne 30 der Ausformung 28 um ein Fügespiel größer ist als die Länge der Sehne 26 der Ausnehmung 23.

An der Trennstelle 27 stehen zwei radial nach außen gerichtete gelochte Nasen 29 ab, mittels derer das Sicherungselement 114 mit einem Montagewerkzeug aufgespreizt werden kann.

Anschließend an das Sicherungselement 14 ist in Figur 1 zuunterst der obere Teil der Antriebswelle 12 gezeigt, der die Grundform eines Zylinderschaftes aufweist.

Dem Sicherungselement 14 benachbart weist die Antriebswelle 12 eine Stirnfläche 31 auf, die durch eine Einführungsschräge 32 zum Schaft 33 der Antriebswelle 12 im Durchmesser gegenüber diesem verjüngt ist.

Die Antriebswelle 12 enthält ferner eine dem Stand der Technik entsprechende und nicht detailliert ausgeführte Fixiernut 34, die mit einer dieser angepaßten Fixierschulter 36 in der Lagerbuchse 17 kuppelbar ist und in diesem Zustand eine Verdrehsicherung zwischen der Antriebswelle 12 und Verteilerläufer 11 bildet.

In dem Schaft 33 ist eine Ringrille 37 eingebracht, deren Querschnitt sich konisch unter Bildung eines Erhebungswinkels 38 zur Mantelfläche des Schaftes 33 erweitert. Dieser Erhebungswinkel liegt vorzugsweise in einem Bereich zwischen 15° - 35° und beträgt beim ersten Ausführungsbeispiel 25°. Der Verteilerläufer 11 wird mit der Antriebswelle 12 in der Weise zusammengefügt, das in einem Vorbereitungsschritt das Sicherungselement 14 in aufgespreizter Form über den unteren Ansatz 19 geschoben und in die Ringnut 21 eingerastet wird, wobei Ausnehmung 23 und Ausformung 28 aneinander liegen. Danach wird der Verteilerläufer 11 mit der Lagerbuchse 17 auf die Antriebswelle 12 geschoben, so daß die Einführungsschräge 32 auf die Ausformung 28 des Sicherungselementes 14 trifft. Durch die konische Form der Einführungsschräge 32 wird das Sicherungselement 14 auffedern gespreizt und durch den Schaft 33 in dieser Form gehalten, bis es zum Ende des Einschiebens mit der Ausformung 28 in die Ringrille 37 durch die Rückfederkraft des Sicherungselements 14 einrastet. Der Querschnitt der Ringrille 37 ist so gestaltet, daß mit dem Einrasten des Sicherungselements 14 in die Ringrille 37 die Sehne 30 der Ausformung 28 und die Sehne 26 der Ausnehmung 23 mit Fügespiel aneinanderliegen und ein Formschluß zwischen Verteilerläufer 11, Sicherungselement 14 und Antriebswelle 12 hergestellt ist.

Der axiale Abstand der Ringrille 37 zur Fixiernut 34 bzw. der Ringnut 21 zur Fixierschulter 36 ist dabei so aufeinander ebgestimmt, daß die Kopplung zwischen Sicherungselement 14 und Ringrille 37 mit der Kopplung zwischen Fixiernut 34 und Fixierschulter 36 gemeinsam erfolgt.

Nunmehr ist über die mit der Fixiernut 34 und der Fixierschulter 36 erzielte Verdrehsicherung zwischen der Antriebswelle 12 und Verteilerläufer 11 hinaus eine Axialsicherung der beiden jetzt genannten Teile durch den über den kraftschlüssig gesicherten Formschluß des Sicherungselementes 14 in der Ringrille 37 und der Ringnut 21 erzielt.

Alternativ kann bei dem zuvor beschriebenen Montageund Rastvorgang anstelle des Sicherungselements 14 das Sicherungselement 114 eingesetzt werden.

Diese Axialsicherung hat den Charakter einer lösbaren Rastverbindung, da das Sicherungselement 14 mittels des Erhebungswinkels 38 der Ringrille 37 bei entsprechender Axialkraft wieder ausrasten kann und somit der Verteilerläufer 11 wieder von der Antriebswelle 12 lösbar ist.

In Figur 2, die das zweite Ausführungsbeispiel zeigt, welches das erste Ausführungsbeispiel modifiziert, haben bereits beschriebene Teile die gleichen Bezugszeichen wie in Figur 1.

Der untere Ansatz 19 ist im Gegensatz zum erstenAusführungsbeispiel ohne die seitliche Ausnehmung 23 ausgebildet und weist statt dessen eine mittig verlaufende Quernut 41 auf, die den unteren Ansatz 19 in voller axialer Höhe durchtrennt und an dem Durchtritt durch die Lagerbuchse 17 zwei gleichartige, diametral gegenüberliegende Ausnehmungen 42 mit rechteckförmiger Grundfläche schafft.

Das Sicherungselement 114 des ersten Ausführungsbeispiels ist im 2. Ausführungsbeispiel als ein Sicherungselement 214 ausgeführt in der Form eines Sicherungsringes mit zwei radial nach innen gerichteten gegenüberliegenden Lappen 43, die den Ausnehmungen 42 angepaßt im montierten Zustand durch diese hindurch in die Ringrille 37 eingreifen. Zur Montage ist das Sicherungselement 214 spreizbar mittels der beiden radial nach außen gerichteten gelochten Nasen 29.

Wird der Verteilerläufer 11 mit der Lagerbuchse 17 und dem montierten Sicherungselement 214 auf die Antriebswelle 12 geschoben, so trifft die Einführungsschräge 32 auf die Lappen 43, wodurch

das Sicherungselement 214 auffedert, bis es zum Ende des Einschiebevorgangs mit den Lappen 43 in die Ringrille 37 einrastet, die Auffederung wieder zurückgeführt und dadurch der Formschluß zwischen Verteilerläufer 11, Sicherungselement 214 und Antriebswelle 12 hergestellt ist.

Bei einer Variante des zweiten Ausführungsbeispiels nach Figur 2a ist in der Antriebswelle 12, die Ringrille 37 ersetzend, eine Teilringrille 44 mit gleicher Querschnittsform angebracht.

Ergänzend verläuft in der Antriebswelle 12 eine Längsnut 46, deren Querschnittsfläche den Lappen 43 angepaßt um ein Bewegungsspiel größer ist.

Die axiale Erstreckung der Längsnut 46 entspricht dem Abstand zwischen Stirnfläche 31 und der Teilringrille 44.

Die Teilringrille 44 ist gegenüberliegend zur Längsnut 46 angebracht und hat eine solche Umfangserstreckung, daß Teilringrille 44 und Längsnut 46 voneinander getrennt Vertiefungen bilden.

Die Fügung des Verteilerläufer 11 mit der Antriebswelle 12 beginnt mit dem Vorbereitungsschritt, daß das Sicherungselement 214 in aufgespreiztem Zustand so über den unteren Ansatz 19 geschoben wird, daß die Lappen 43 in den Aunehmung 42 gleiten.

Nach dem Einrasten in die Ringnut 21 ist das Sicherungselement 214 lagefixiert.

Danach wird der Verteilerläufer 11 mit der Lagerbuchse 17 auf die Antriebswelle 12 geschoben, wobei der Verteilerläufer 11 so gerichtet ist, daß ein Lappen 43 in die Längsnut 46 eintaucht, während durch den gegenüberliegenden Lappen 43 mit seinem Gleiten über die Einführschräge 32 das Sicherungselement 214 aufgespreizt wird.

Durch den Schaft 33 wird das Sicherungselement 214 in dieser Form gehalten, bis der auf dem Schaft 33 gleitende Lappen 43 die Teilringrille 44 erreicht und dadurch das Sicherungselement 14 wieder vollständig in die Ringnut 21 und mit dem gegenüber der Längsnut 46 angeordneten Lappen 43 in die Teilringrille 44 einrasten kann.

Mit der ebenfalls erfolgten Kopplung zwischen Fixiernut 34 und Fixierschulter 36 ist über den in der Längsnut 46 eingeschlossene Lappen 43 eine redundant absichernde Drehmitnahme zwischen Antriebswelle 12 und Verteilerläufer 11 erstellt, ohne daß die Eigenschaft des Sicherungselements 214 als Axialsicherung, die jetzt über den in der Teilringrille 44 einrastenden Lappen 43 erfolgt, verloren geht.

## Ansprüche

1. Verteilerläufer von Zündverteilern für Brennkraftmaschinen, der einen zu einer Antriebswelle (12) des Zündverteilers koaxialen Schaft (16) aufweist, mit einer fest darin angeordneten Lagerbuchse (17), die in ihrer Außenwandung eine zur Drehachse (24) koaxiale Ringnut (21) enthält und mit einem in die Ringnut (21) eingesetzten federnden Sicherungselement (14), das beim axialen Aufstecken des Verteilerläufers (11) auf die Antriebswelle (12) in eine Ringrille (37) der Antriebswelle (12) einrastbar ist, dadurch gekennzeichnet, daß die Lagerbuchse (17) aus dem Schaft (16) herausragt und umfangseitig durch die Ringnut (21) eingeschnürt ist, die seitlich durch mindestens eine Ausnehmung (23) unterbrochen ist und daß das Sicherungselement (14, 114, 214) als Federbügel ausgebildet ist, mit mindestens einer, der mindestens einen Ausnehmung (23) angepaßten Ausformung (28), die beim Zusammenfügen des Verteilerläufers (11) mit der Antriebswelle (12) durch die mindestens eine Ausnehmung (23) hindurch in die Ringrille (37) einrastbar ist.

2. Verteilerläufer nach Anspruch 1, dadurch gekennzeichnet, daß die Ausnehmung (23) sich in Längsrichtung der Lagerbuchse (17) zwischen Ringnut (21) und einer Stirnseite (22) der Lagerbuchse (17) erstreckt und im Querschnitt ein Kreissegment ist, dessen eine Sehne (26) in die Ringrille (37) eintaucht.

3. Verteilerläufer nach Anspruch 2, dadurch gekennzeichnet, daß das Sicherungselement (14) als Sprengring ausgebildet ist und die Ausformung (28) sehnenartig verläuft und die Länge der Sehne (30) der Ausformung (28) um ein Fügespiel größer ist als die Länge der Sehne (26) der Ausnehmung (23).

4. Verteilerläufer nach Anspruch 2, dadurch gekennzeichnet, daß das Sicherungselement (114) als Sicherungsring ausgebildet ist und die Ausformung (28) sehnenartig verläuft und die Länge der Sehne (30) der Ausformung (28) um ein Fügespiel größer ist als die Länge der Sehne (26) der Ausnehmung (23); (Figur 1a).

5. Verteilerläufer nach Anspruch 1-4, dadurch gekennzeichnet, daß die eine Stirnfläche (31) der Antriebswelle (12), die dem Verteilerläufer (11) zugewandt ist, durch eine kreiskegelstumpfförmige Einführschräge (32) im Durchmesser verjüngt ist.

6. Verteilerläufer nach Anspruch 1-5, dadurch gekennzeichnet, daß der Querschnitt der Ringrille (37) sich konisch mit einem Erhebungswinkel (38) zur Mantelfläche der Antriebswelle (12) hin erweitert.

7. Verteilerläufer nach einem der vorstehenden Ansprüche, dadurch gekennzeichnet, daß der Querschnitt der Ringnut (21) rechteckig ist.

8. Verteilerläufer nach Anspruch 1, dadurch gekennzeichnet, daß zwischen Ringnut (21) und Stirnseite (22) der Lagerbuchse (17) diese durch eine mittig verlaufende Quernut (41) durchtrennt wird und dadurch zwei gleichgestaltete Ausnehmungen (42), vorzugsweise mit rechteckförmiger Grundflä-

che gebildet werden (Figur 2).

9. Verteilerläufer nach Anspruch 8, dadurch gekennzeichnet, daß das Sicherungselement (214) als Sicherungsring ausgebildet ist und die Ausformung (28) aus zwei radial nach innen gerichteten gegenüberliegenden Lappen (43) besteht.

10. Verteilerläufer nach Anspruch 9, dadurch gekennzeichnet, daß in der Antriebswelle (12) eine von deren Stirnfläche (31) ausgehende Längsnut (46) verläuft, deren Querschnittsfläche den Lappen (43) angepaßt, die Ringrille (37) als eine Teilringrille (44) ausgeführt ist, die Längsnut (46) in den in Umfangsrichtung an die Teilringrille (44) angrenzenden Mantelbereich der Antriebswelle (12) reicht und einer der Lappen (43) in die Längsnut (46) und der andere der Lappen (43) in die Teilringrille (44) eintaucht.

11. Verteilerläufer nach Anspruch 10, dadurch gekennzeichnet, daß der Querschnitt der Teilringrille (44) sich konisch unter Bildung eines Erhebungswinkels (38) zur Mantelfläche der Antriebswelle (12) hin erweitert.

# FIG.1

# FIG.1a

# FIG. 2

# FIG. 2a